# EUROPEAN PATENT SPECIFICATION

(11) **EP 3 949 821 B1**
(45) Date of publication and mention of the grant of the patent: **20.03.2024**
(21) Application number: 21196844.1
(22) Date of filing: 17.08.2018
(51) Int. Cl.: A47L 1/02, A47L 11/38

(54) **SAFETY PROTECTION APPARATUS**
SICHERHEITSSCHUTZVORRICHTUNG
APPAREIL DE PROTECTION DE SÉCURITÉ

(30) Priority: 25.08.2017 CN 201710743993
(43) Date of publication of application: 09.02.2022
(62) Divisional of application: 18849078.3
(73) Proprietor: Ecovacs Robotics Co., Ltd., Wuzhong District Suzhou, Jiangsu 215168 (CN)
(72) Inventor: CHEN, Qi, Suzhou Jiangsu 215131 (CN)
(74) Representative: Renaudo, Adrien Hanouar

(56) References cited:
- CN-A- 104 146 650
- CN-U- 206 261 541

## Description

### TECHNICAL FIELD

The present disclosure relates to a safety protection apparatus, applied to a self-propelled surface cleaning robot, in particular to a cleaning apparatus for cleaning walls, windows, solar panels and the like.

### BACKGROUND ART

In the existing cleaning robot for cleaning a vertical wall surface, besides a robot body, a safety protection apparatus connected to the robot body needs to be arranged, for example, a safety buckle connected to the robot body through a safety rope. A potential safety hazard that the robot is damaged or smashed to pedestrians after falling is prevented. When the safety protection apparatus includes an adsorption member and needs to clean a vertical wall surface such as a large floor window, the adsorption member and the robot are located on the same working surface. With this arrangement, it is possible to cause the robot to collide with the adsorption member to make the robot or the adsorption member to be separated, resulting in danger. Alternatively, when the adsorption member and the robot are located on different adsorption surfaces, and a child plays or other objects inadvertently collide with the adsorption member to cause the adsorption member to fall off, the safety protection apparatus cannot continue to play a protective role against falling of the robot.

In view of this, it is necessary to improve the existing cleaning robot to solve the above problems.

CN 104146650 A discloses a window wiping robot and a safety sucking device of the window wiping robot. The window wiping robot comprises a robot body and the safety sucking devices, wherein the robot body is connected with the safety sucking devices through safety ropes. Each safety sucking device comprises sucking bodies, coils and fixed pillars. One faces of the sucking bodies are sucking faces and the other faces are installation faces. The outer edges of the coils are connected with the safety ropes, the safety ropes can be wound on the outer edges of the coils, and the coils can be arranged on the installation faces in a rotating mode and can be connected with the sucking bodies in a clamped mode through elastic telescopic units. By means of the window wiping robot and the safety sucking device of the window wiping robot, impact energy can be decomposed, tension to the sucking bodies in the impact process can be reduced, and the safety of the window wiping robot in the working process is improved.

CN 206651541 U provides a safety arrangement and window -cleaning robot, this safety arrangement include safety rope and the safe sucking disc that is used for cooperating the installation with fixed object, and safe sucking disc includes spacing boss, the safety rope is including rope body and stopper, the first end of rope body is connected with window -cleaning robot, the second end of rope body is formed with the rope sling of slip -knot formula, the stopper is fixed and is held at the second, a biggest girth for limiting the rope sling, wherein, the position of the slip -knot node through guide rope cover can the guide rope cover the girth size, the cross -sectional width of stopper is greater than the diameter of the slip -knot node of rope sling, when slip -knot node and stopper butt, the girth of rope sling is the biggest girth, and the rope sling can overlap to be established on spacing boss. Among this technical scheme, through set up the stopper on the rope body, avoid the rope sling unconfinedly to enlarge to increase the safety in utilization of safety rope, and reduced the rope sling and tightened up the required time, improved the user and used experience.

### SUMMARY

An objective of the present disclosure is to provide a multi-medium intelligent cleaning apparatus and a control method, which are used for solving the problem in the prior art of separation of an adsorption member caused by collision of a foreign object with the adsorption member.

The multi-medium intelligent cleaning apparatus, for cleaning a working surface,
comprising a self-propelled cleaning robot and a safety protection apparatus connected to the self-propelled cleaning robot through a connecting member, the safety protection apparatus comprising an adsorption member for adsorbing on a surface to be adsorbed,
where a handle is formed at along an outer end edge of the adsorption member, and the handle drives the outer end edge of the adsorption member to be separated from the adsorption surface under an action of an external force of a user.

Additionally, a middle part of the handle is provided with a through hole for facilitating finger insertion of a user.

Additionally, an anti-collision member arranged on the adsorption member, where the anti-collision member is protruded from an outer end edge of the adsorption member so as to prevent a foreign object from impacting the adsorption member.

Additionally, a cross section of the anti-collision member and a cross section of the adsorption member are circular, and a diameter of the anti-collision member is larger than a diameter of the adsorption member.

Additionally, the anti-collision member and the adsorption member are arranged coaxially.

Additionally, the multi-medium intelligent cleaning apparatus further comprises a fixing assembly for detachably fixing the anti-collision member on the adsorption member.

Additionally, the fixing assembly comprises a clamping portion arranged on the adsorption member and a buckle portion arranged on the anti-collision member.

Additionally, the multi-medium intelligent cleaning apparatus further comprises: a second sensor for detecting, when the anti-collision member is subjected to a collision force, a magnitude of the collision force, and a control module connected to the second sensor, where,
the control module is configured to control the self-propelled surface cleaning robot to stop working, turn or give an alarm when the collision force detected by the second sensor is greater than a threshold.

Additionally, there are at least two second sensors uniformly distributed on a bearing surface of the anti-collision member.

Additionally, the self-propelled surface cleaning robot comprises a movable bumper and a first sensor connected to the movable bumper to generate a signal when the movable bumper shifts.

Additionally, the anti-collision member is located at a location where the anti-collision member is able to abut against the movable bumper to enable the movable bumper to shift when the self-propelled surface cleaning robot approaches the adsorption member. Additionally, a height of an upper surface of the movable bumper from the working surface is H1;
a height of a lower surface of the movable bumper from the working surface is H2;
a height of an upper surface of the anti-collision member from the surface to be adsorbed is H3; and
a height of a lower surface of the anti-collision member from the surface to be adsorbed is H4,
where H2 ≤ H3 ≤ H1, or H2 ≤ H4 ≤ H1.

Additionally, the connecting member is a safety rope, and the safety protection apparatus further comprises a retracting member fixed with the adsorption member, where the retracting member is used for retracting the safety rope.

Additionally, the anti-collision member is provided with a yielding groove for yielding the handle.

Additionally, the self-propelled surface cleaning robot is a glass cleaning robot or a solar panel cleaning robot.

Further provided a safety protection apparatus, applied to a self-propelled surface cleaning robot, comprising:
an adsorption member for adsorbing on a surface to be adsorbed, where an outer end edge of the adsorption member protrudes upwards to form a handle, and the handle drives the outer end edge of the adsorption member to be separated from the adsorption surface under an action of an external force of a user.

### BRIEF DESCRIPTION OF THE DRAWINGS

The accompanying drawings illustrated herein are used to provide a further understanding of the present disclosure and constitute a part of the present application, and illustrate embodiments of the present application and together with the description serve to explain the present application and are not to be construed as unduly limiting the present application. In the drawings:
FIG. 1 is a schematic structural view of a self-propelled cleaning robot of a multi-medium intelligent cleaning apparatus of the present disclosure;
FIG. 2 is a schematic assembled view of structures of the multi-medium intelligent cleaning apparatus of the present disclosure except for the self-propelled cleaning robot;
FIG. 3 is a schematic exploded view of structures of the multi-medium intelligent cleaning apparatus of the present disclosure except for the self-propelled cleaning robot;
FIG. 4 is a schematic working view of the multi-medium intelligent cleaning apparatus of the present disclosure;
FIG. 5 is a schematic structural view of an adsorption member in the multi-medium intelligent cleaning apparatus of the present disclosure;
FIG. 6 is a schematic structural view of an anti-collision member in the multi-medium intelligent cleaning apparatus of the present disclosure; and
FIG. 7 is a flow chart of a control method of a multi-medium intelligent cleaning apparatus of the present disclosure.

### DETAILED DESCRIPTION OF EXAMPLE EMBODIMENTS

For the objectives, technical solutions, and advantages of the present application to become more fully apparent, the technical solutions of the present application will be clearly and completely described below with reference to specific embodiments of the present application and the accompanying drawings. It is apparent that the described embodiments are only a portion of the embodiments of the present application and not all embodiments. Based on the embodiments in the present application, all other embodiments obtained by a person of ordinary in the art without involving any inventive effort are within the scope of protection of the present application.

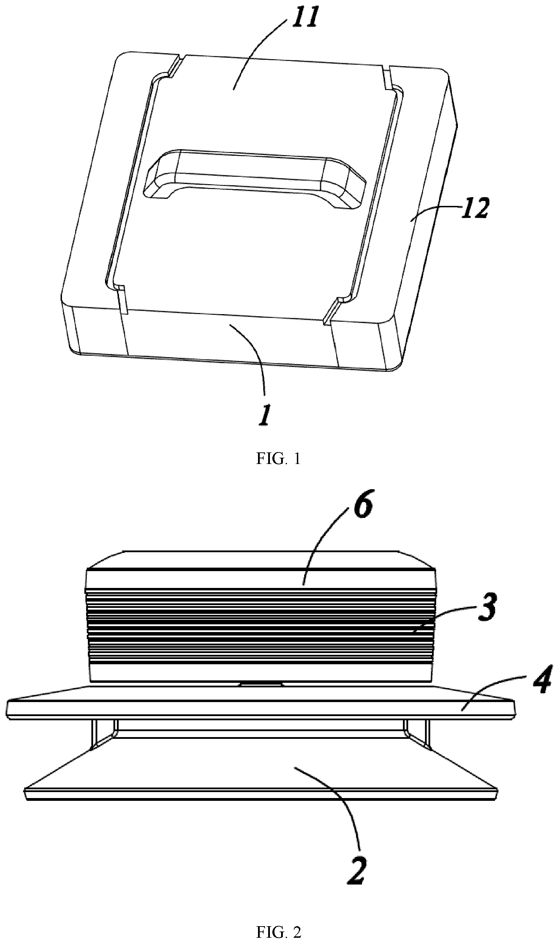

As shown in FIGs. 1 to 3, a multi-medium intelligent cleaning apparatus is used for cleaning a working surface. The multi-medium intelligent cleaning apparatus includes a self-propelled cleaning robot 1 and a safety protection apparatus connected to the self-propelled cleaning robot 1 through a connecting member 3. The safety protection apparatus includes an adsorption member 2 for adsorbing on a surface to be adsorbed. The multi-medium intelligent cleaning apparatus further includes an anti-collision member 4 arranged on the adsorption member 2, a fixing assembly 5 for detachably fixing the anti-collision member 4 on the adsorption member 2, and a retracting member 6 fixed with the adsorption member 2.

The self-propelled cleaning robot 1 of the multi-medium intelligent cleaning apparatus may be a glass cleaning robot or a solar panel cleaning robot, etc.

In the present embodiment, the adsorption member 2 is a suction cup, and the working surface may be a window, a wall, a solar panel and the like, and is mainly a plane having a certain inclination angle with the horizontal ground or a curved surface having a certain radian.

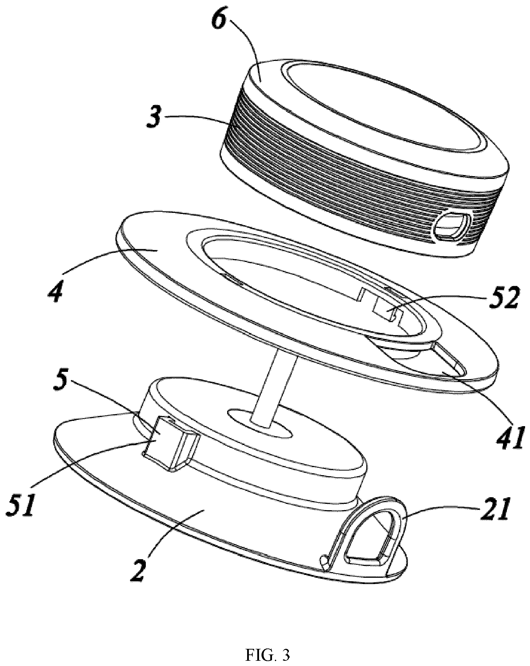

As shown in FIGs. 2 and 3, the anti-collision member 4 protrudes from an outer end edge of the adsorption member 2 to prevent the self-propelled cleaning robot 1 from impacting the adsorption member 2. A cross section of the anti-collision member 4 and a cross section of the adsorption member 2 are circular. In an implementable technical solution, as shown in FIG. 3, the anti-collision member 4 and the adsorption member 2 may be arranged coaxially. A diameter of the anti-collision member 4 is greater than a diameter of the adsorption member 2. Of course, the anti-collision member 4 may be formed in other shapes, such as a polygonal shape, as long as the outer edge thereof protrudes from an outer edge of an end portion of the adsorption member 2. Specifically, as shown in FIG. 3, in the present embodiment, the anti-collision member 4 employs an anti-collision ring that is sleeved on an upper portion of the adsorption member 2. It is to be noted that various other configurations of the anti-collision member 4 are also possible. For example, the anti-collision member may be formed as a cover covering the adsorption member 2, or the anti-collision member may be formed as a fence structure. The anti-collision member 4 is preferably made of a rigid material to improve impact resistance.

The anti-collision member 4 protrudes from the adsorption member 2, so that when the self-propelled cleaning robot 1 is about to collide with the adsorption member 2, the self-propelled cleaning robot 1 is abutted against, and falling off of the adsorption member 2 caused by the fact that the self-propelled cleaning robot 1 directly collides with the adsorption member 2 is prevented.

As shown in FIG. 1, the self-propelled cleaning robot 1 includes a cleaning body 11, an adsorption assembly for adsorbing the cleaning body 11 on the working surface, a driving assembly for allowing the cleaning body 11 to walk, a movable bumper 12 arranged on one side of the cleaning body 11, a first sensor for connecting to the movable bumper 12 to generate a signal when the movable bumper 12 shifts, and a control unit (such as a CPU). The driving assembly is connected to the control unit, and the first sensor is connected to the control unit.

When the self-propelled cleaning robot 1 walks, if colliding with an obstacle, the movable bumper 12 generates a certain shift relative to the cleaning body 11. At this time, the first sensor senses the shift of the movable bumper 12 and transmits a signal to the control unit, and the control unit determines that the self-propelled cleaning robot 1 collides with the obstacle, and controls the self-propelled cleaning robot 1 to turn or retreat so as to avoid the obstacle and continue walking.

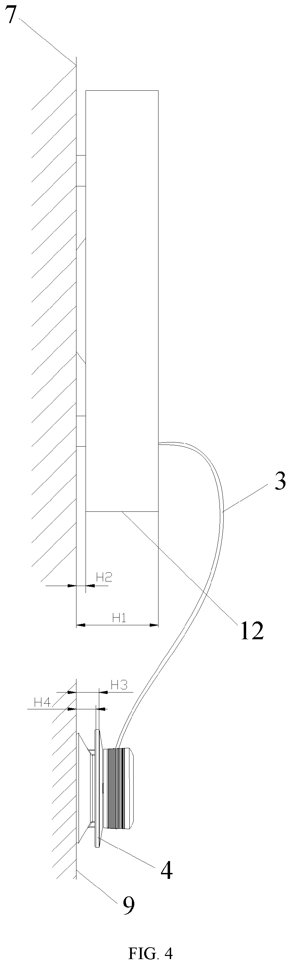

The anti-collision member 4 is matched with the height of the movable bumper 12, i.e. the anti-collision member 4 is located at a location where the anti-collision member 4 may abut against the movable bumper 12 to enable the movable bumper 12 to shift when the self-propelled cleaning robot 1 approaches the adsorption member 2. Specifically, as shown in FIG. 4, a height of an upper surface of the movable bumper 12 from a working surface 7 is H1; a height of a lower surface of the movable bumper 12 from the working surface 7 is H2; a height of an upper surface of the anti-collision member 4 from a surface to be adsorbed 9 is H3; and a height of a lower surface of the anti-collision member 4 from the surface to be adsorbed 9 is H4, where H2 ≤ H3 ≤ H1, orH2 ≤ H4 ≤ H1.

Here it is to be noted that the working surface 7 and the surface to be adsorbed 9 may be the same surface or different surfaces.

When the working surface 7 and the surface to be adsorbed 9 are the same surface, the adsorption member 2 is adsorbed on a cleaning working surface of the self-propelled cleaning robot 1. If the self-propelled cleaning robot 1 is close to the adsorption member 2, the movable bumper 12 firstly collides with the anti-collision member 4 and generates a certain shift. At this time, the first sensor senses that the movable bumper 12 shifts, and the self-propelled cleaning robot 1 retreats for a distance according to a detection result and then continues to walk. Therefore, the self-propelled cleaning robot 1 may be prevented from impacting the adsorption member 2 and climbing along the adsorption member 2, so that the adsorption member 2 or the self-propelled cleaning robot 1 is separated from the working surface. For example, when the self-propelled cleaning robot is adsorbed to the work surface through an adsorption unit at the bottom thereof, when the self-propelled cleaning robot climbs along the adsorption member 2, the adsorption unit leaks air to cause the self-propelled cleaning robot to fall from the work surface.

When the working surface 7 and the surface to be adsorbed are different surfaces, it indicates that the adsorption member 2 does not adsorb on the cleaning working surface of the self-propelled cleaning robot 1. For example, a user adsorbs the adsorption member 2 on the other side of window glass or adsorbs the adsorption member 2 on a wall surface near a window. At this time, the anti-collision member 4 may also play a good protective role, such as preventing children from playing or other objects from unintentionally colliding with the adsorption member 2 to cause the adsorption member 2 to fall off.

As shown in FIG. 3, the fixing assembly 5 includes a clamping portion 51 arranged on the adsorption member 2 and a buckle portion 52 arranged on the anti-collision member 4. In a specific implementation, at least two the fixing assemblies 5 may be provided. For example, the quantity of the clamping portions 51 is two, and the two clamping portions 51 are arranged on the adsorption member 2 and are in mirror symmetry with respect to a symmetry axis of the adsorption member 2. Correspondingly, the quantity of the buckle portions 52 is two, and the two buckle portions 52 are arranged on the anti-collision member 4 and are in positional correspondence with the two clamping portions 51 respectively. Of course, the anti-collision member 4 may also be detachably arranged on the adsorption member 2 by other means, such as by screwing.

In the present embodiment, the anti-collision member 4 is set to be detachable, so that when the adsorption member 2 and the self-propelled cleaning robot 1 work on the same working surface, the anti-collision member 4 is installed on the adsorption member 2. If the adsorption member 2 does not have a risk of touching the self-propelled cleaning robot 1, the anti-collision member 4 may be removed.

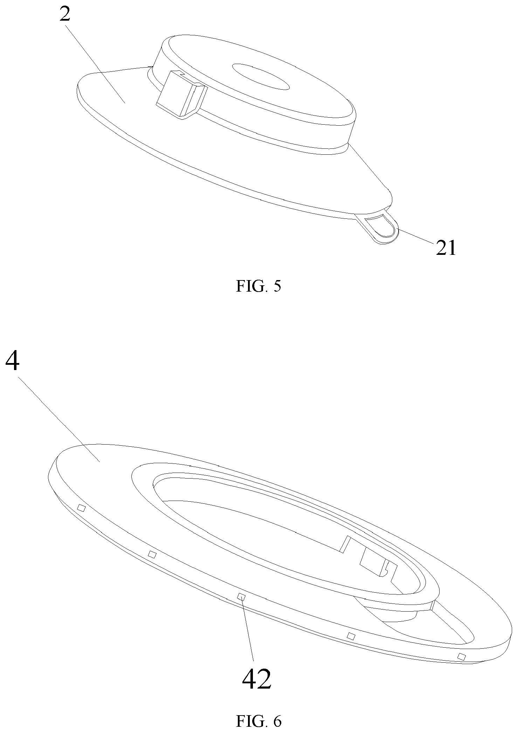

As shown in FIG. 3, the connecting member 3 is a safety rope, and the retracting member 6 is fixed with the adsorption member 2 and is used for retracting the safety rope. A handle 21 is formed at the outer end edge of the adsorption member 2. Specifically, as shown in FIG. 3, the outer end edge of the adsorption member 2 protrudes upwards to form a handle 21, and the anti-collision member 4 is provided with a yielding groove 41 for yielding the handle 21. The handle 21 facilitates grasping by the user to separate the adsorption member 2 from the surface to be adsorbed. As shown in FIG. 3, the handle 21 is provided with a through hole, a user's finger is inserted into the through hole and then bent with a certain arc, and the outer end edge of the adsorption member 2 may be easily separated from the adsorption surface by applying a certain pulling force, so that the safety protection apparatus may be conveniently taken down. Or, as shown in FIG. 5, the handle 21 extending outwards is formed at the outer end edge of the adsorption member 2. By adopting the structure shown in FIG. 5, the anti-collision member 4 does not need to be provided with a yielding groove. Also, the handle 21 may be provided with a through hole to facilitate grasping by the user.

According to the multi-medium intelligent cleaning apparatus, the anti-collision member 4 is arranged on the adsorption member 2, so that separation of the anti-collision member 4 or the self-propelled cleaning robot 1 caused by the fact that the self-propelled cleaning robot 1 collides with the anti-collision member 4 is prevented, and the adsorption member 2 may also be prevented from being separated by being collided by a foreign object. By setting the anti-collision member 4 to be detachable, the anti-collision member 4 may be detached when not used, and the adsorption capacity of the adsorption member 2 is improved. The multi-medium intelligent cleaning apparatus is safe and convenient to use and is not easy to fall.

As shown in FIG. 6, the multi-medium intelligent cleaning apparatus provided by an embodiment of the present disclosure may further include: a second sensor 42 for detecting, when the anti-collision member 4 is subjected to a collision force, the magnitude of the collision force, and a control module connected to the second sensor 42. The control module is configured to control the self-propelled cleaning robot to stop working, turn or give an alarm when the collision force detected by the second sensor 42 is greater than a threshold. It is to be noted that the control module may be a control unit (such as a CPU) arranged on the multi-medium intelligent cleaning apparatus, or a control member installed on the adsorption member 2. As shown in FIG. 6, the second sensors 42 may be plural, and at least two second sensors 42 may be uniformly distributed on a bearing surface of the anti-collision member. For example, as shown in FIG. 6, the anti-collision member is in the shape of a circular disk, and the anti-collision member is provided with one second sensor 42 at intervals of a center angle (e.g., 30 degrees, 45 degrees, etc.). In an embodiment of the present disclosure, the quantity of the arranged second sensor is not specifically limited. In a specific implementation, the quantity of the arranged second sensor may be selected according to an actual size of the anti-collision member, the attributes of the selected second sensors and the like.

In an embodiment of the present disclosure, by detecting the magnitude of a collision force subjected by an anti-collision member, a self-propelled cleaning robot is controlled to stop working, turn or give an alarm when the collision force is too large, so that the probability that the adsorption member is separated from an adsorption surface due to the too large collision force may be reduced, and the working safety of the self-propelled cleaning robot may be improved. For example, the working surface of the self-propelled cleaning robot 1 and the surface to be adsorbed of the adsorption member 2 are the same surface, the control module is a control unit arranged on the self-propelled cleaning robot 1, when the collision force or other external forces of the self-propelled robot to which the collision prevention member 4 on the adsorption member 2 is subjected is greater than a threshold, the adsorption member 2 does not adsorb the surface to be adsorbed any more, and the effect of safety protection cannot be achieved. At this time, the control unit controls the self-propelled robot to give an alarm or stop working. For another example, the working surface of the self-propelled cleaning robot 1 and the surface to be adsorbed of the adsorption member 2 are different surfaces, the control module is a control member 2 arranged on the adsorption member 2, and when an external force (for example, a child accidentally touches the adsorption member 2) to which the anti-collision member 4 on the adsorption member 2 is subjected is greater than a threshold, the adsorption member 2 does not adsorb the surface to be adsorbed any more, and the effect of safety protection cannot be achieved. At this time, the control member sends information to the self-propelled robot, so that the control unit controls the self-propelled robot to give an alarm or stop working, or the adsorption member 2 gives an alarm.

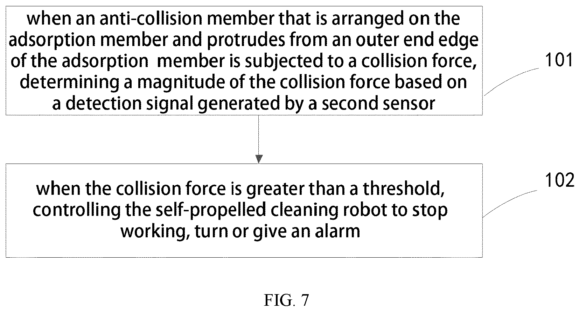

As shown in FIG. 7, another embodiment of the present disclosure provides a control method of a multi-medium intelligent cleaning apparatus. The multi-medium intelligent cleaning apparatus includes a self-propelled cleaning robot and a safety protection apparatus connected to the self-propelled cleaning robot through a connecting member. The safety protection apparatus includes an adsorption member for adsorbing on a surface to be adsorbed. The execution body of the method provided by the present embodiment may be a control module of the self-propelled cleaning robot. Specifically, as shown in the flowchart of FIG. 7, the method includes the following steps:
101: when an anti-collision member that is arranged on the adsorption member and protrudes from an outer end edge of the adsorption member is subjected to a collision force, determining a magnitude of the collision force based on a detection signal generated by a second sensor; and
102: when the collision force is greater than a threshold, controlling the self-propelled cleaning robot to stop working, turn or give an alarm.

In the above 101, the arrangement solution of the anti-collision member may be referred to the corresponding contents in the above-mentioned embodiment, and will not be described in detail here.

In the above 102, the threshold may be determined based on the adsorption force attribute of the adsorption member. For example, when the adsorption force of the adsorption member is large, the threshold may be set to a larger value, and when the adsorption force of the adsorption member is small, the threshold may be set to a smaller value. The embodiments of the present disclosure are not particularly limited to setting the threshold.

According to the control method of the multi-medium intelligent cleaning apparatus provided by the present disclosure, by detecting the magnitude of a collision force subjected by an anti-collision member, a self-propelled cleaning robot is controlled to stop working, turn or give an alarm when the collision force is too large, so that the probability that the adsorption member is separated from an adsorption surface due to the too large collision force may be reduced, and the working safety of the self-propelled cleaning robot may be improved.

Furthermore, the method provided by the embodiment of the present disclosure may further include the following steps:
103: when a movable bumper of the self-propelled cleaning robot shifts due to collision, determining that the self-propelled cleaning robot collides with an obstacle based on a signal generated by a first sensor; and
104: controlling the self-propelled robot to perform turning or retreating actions.

It is also to be noted that the terms "include", "comprise", or any other variation thereof, are intended to cover a non-exclusive inclusion, such that a process, method, article, or apparatus that includes a list of elements does not include only those elements but may include other elements not expressly listed or inherent to such process, method, article, or apparatus. An element defined by the phrase "include a" does not, without more constraints, preclude the existence of additional identical elements in the process, method, article, or apparatus that includes the element.

## Claims

1. A multi-medium intelligent cleaning apparatus, for cleaning a working surface (7), comprising a self-propelled cleaning robot (1) and a safety protection apparatus connected to the self-propelled cleaning robot (1) through a connecting member (3), the safety protection apparatus comprising an adsorption member (2) for adsorbing on a surface to be adsorbed (9), **characterized in that**
a handle (21) is formed along an outer end edge of the adsorption member (2), and the handle (21) drives the outer end edge of the adsorption member (2) to be separated from the adsorption surface under an action of an external force of a user.

2. The multi-medium intelligent cleaning apparatus according to claim 1, wherein a middle part of the handle (21) is provided with a through hole for facilitating finger insertion of a user.

3. The multi-medium intelligent cleaning apparatus according to claim 1, wherein an anti-collision member (4) arranged on the adsorption member (2), wherein the anti-collision member (4) is protruded from an outer end edge of the adsorption member (2) so as to prevent a foreign object from impacting the adsorption member (2).

4. The multi-medium intelligent cleaning apparatus according to claim 3, wherein a cross section of the anti-collision member (4) and a cross section of the adsorption member (2) are circular, and a diameter of the anti-collision member (4) is larger than a diameter of the adsorption member (2).

5. The multi-medium intelligent cleaning apparatus according to claim 4, wherein the anti-collision member (4) and the adsorption member (2) are arranged coaxially.

6. The multi-medium intelligent cleaning apparatus according to claim 3, further comprising a fixing assembly (5) for detachably fixing the anti-collision member (4) on the adsorption member (2).

7. The multi-medium intelligent cleaning apparatus according to claim 6, wherein the fixing assembly (5) comprises a clamping portion (51) arranged on the adsorption member (2) and a buckle portion (52) arranged on the anti-collision member (4).

8. The multi-medium intelligent cleaning apparatus according to claim 3, further comprising: a second sensor (42) for detecting, when the anti-collision member (4) is subjected to a collision force, a magnitude of the collision force, and a control module connected to the second sensor (42), wherein
the control module is configured to control the self-propelled surface cleaning robot to stop working, turn or give an alarm when the collision force detected by the second sensor (42) is greater than a threshold.

9. The multi-medium intelligent cleaning apparatus according to claim 8, wherein there are at least two second sensors (42) uniformly distributed on a bearing surface of the anti-collision member (4).

10. The multi-medium intelligent cleaning apparatus according to claim 3, wherein the self-propelled surface cleaning robot comprises a movable bumper (12) and a first sensor connected to the movable bumper (12) to generate a signal when the movable bumper (12) shifts.

11. The multi-medium intelligent cleaning apparatus according to claim 10, wherein the anti-collision member (4) is located at a location where the anti-collision member (4) is able to abut against the movable bumper (12) to enable the movable bumper (12) to shift when the self-propelled surface cleaning robot approaches the adsorption member (2).

12. The multi-medium intelligent cleaning apparatus according to claim 11, wherein,
a height of an upper surface of the movable bumper (12) from the working surface (7) is H1;
a height of a lower surface of the movable bumper (12) from the working surface (7) is H2;
a height of an upper surface of the anti-collision member (4) from the surface to be adsorbed (9) is H3; and
a height of a lower surface of the anti-collision member (4) from the surface to be adsorbed (9) is H4,
wherein H2 ≤ H3 ≤ H1, or H2 ≤ H4 ≤ H1.

13. The multi-medium intelligent cleaning apparatus according to claim 1, wherein the connecting member (3) is a safety rope, and the safety protection apparatus further comprises a retracting member (6) fixed with the adsorption member (2), wherein the retracting member (6) is used for retracting the safety rope.

14. The multi-medium intelligent cleaning apparatus according to claim 3, wherein the anti-collision member (4) is provided with a yielding groove (41) for yielding the handle (21).

15. The multi-medium intelligent cleaning apparatus according to claim 1, wherein the self-propelled surface cleaning robot is a glass cleaning robot or a solar panel cleaning robot.

16. A safety protection apparatus, applied to a self-propelled surface cleaning robot, comprising:
an adsorption member (2) for adsorbing on a surface to be adsorbed (9),
**characterized in that** an outer end edge of the adsorption member (2) protrudes upwards to form a handle (21), and the handle (21) drives the outer end edge of the adsorption member (2) to be separated from the adsorption surface under an action of an external force of a user.

## Patentansprüche

1. Intelligente multimediale Reinigungseinheit zum Reinigen einer Arbeitsfläche (7), umfassend einen selbstfahrenden Reinigungsroboter (1) und eine Sicherheitsschutzeinheit, die mit dem selbstfahrenden Reinigungsroboter (1) über ein Verbindungselement (3) verbunden ist, wobei die Sicherheitsschutzeinheit ein Adsorptionselement (2) zum Adsorbieren auf einer zu adsorbierenden Oberfläche umfasst, ist **dadurch gekennzeichnet, dass** der Griff (21) entlang der äußeren Endkante des Adsorptionselements (2) angeordnet ist, und dass der Griff (21) die äußere Endkante des Adsorptionselements (2) so antreibt, dass sie unter der Einwirkung der äußeren Kraft des Benutzers von der Adsorptionsfläche getrennt wird.

2. Intelligente multimediale Reinigungseinheit nach Anspruch 1, wobei das mittlere Teil des Griffs (21) mit der Durchgangsöffnung versehen ist, um das Einführen der Finger des Benutzers zu erleichtern.

3. Intelligente multimediale Reinigungseinheit nach Anspruch 1 wobei ein Antikollisionselement (4) auf dem Adsorptionselement (2) angeordnet ist, wobei das Antikollisionselement (4) von der äußeren Endkante des Adsorptionselements (2) vorsteht, um so den Zusammenstoß eines Fremdkörpers mit dem Adsorptionselement (2) zu verhindern.

4. Intelligente multimediale Reinigungseinheit nach Anspruch 3, wobei der Querschnitt des Antikollisionselements (4) und der Querschnitt des Adsorptionselements (2) kreisförmig sind und der Durchmesser des Antikollisionselements (4) größer ist als der Durchmesser des Adsorptionselements (2).

5. Intelligente multimediale Reinigungseinheit nach Anspruch 4, wobei das Antikollisionselement (4) und das Adsorptionselement (2) koaxial angeordnet sind.

6. Intelligente multimediale Reinigungseinheit nach Anspruch 3, die ferner eine Befestigungseinheit (5) zur abnehmbaren Befestigung des Antikollisionselements (4) am Adsorptionselement (2) umfasst.

7. Intelligente multimediale Reinigungseinheit nach Anspruch 6, wobei die Befestigungseinheit (5) einen am Adsorptionselement (2) angeordneten Klemmabschnitt (51) und einen am Antikollisionselement (4) angeordneten Schnallenabschnitt (52) umfasst.

8. Intelligente multimediale Reinigungseinheit nach Anspruch 3, ferner umfassend: den zweiten Sensor (42) zum Erfassen der Stärke der Stoßkraft, wenn das Antikollisionselement (4) der Stoßkraft ausgesetzt ist, und das Steuermodul, das mit dem zweiten Sensor (42) verbunden ist, wobei das Steuermodul so konfiguriert ist, dass es den selbstfahrenden Oberflächenreinigungsroboter so steuert, dass er aufhört zu arbeiten, sich umdreht oder einen Alarm auslöst, wenn die vom zweiten Sensor (42) erfasste Stoßkraft größer als der Grenzwert ist.

9. Intelligente multimediale Reinigungseinheit nach Anspruch 8, bei den mindestens zwei weiteren Sensoren (42) gleichmäßig auf der Auflagefläche des Antikollisionselements (4) verteilt sind.

10. Intelligente multimediale Reinigungseinheit nach Anspruch 3, wobei der selbstfahrende Oberflächenreinigungsroboter einen beweglichen Stoßfänger (12) und den ersten Sensor umfasst, der mit dem beweglichen Stoßfänger (12) verbunden ist, um ein Signal zu erzeugen, wenn sich der bewegliche Stoßfänger (12) bewegt.

11. Intelligente multimediale Reinigungseinheit nach Anspruch 10, bei der das Antikollisionselement (4) an der Stelle angeordnet ist, an der das Antikollisionselement (4) an dem beweglichen Stoßfänger (12) anliegen kann, damit sich der bewegliche Stoßfänger (12) verschieben kann, wenn sich der selbstfahrende Oberflächenreinigungsroboter dem Adsorptionselement (2) nähert.

12. Intelligente multimediale Reinigungseinheit nach Anspruch 11, wobei,
die Höhe der oberen Fläche des beweglichen Stoßfängers (12) von der Arbeitsfläche (7) H1 ist;
die Höhe der unteren Fläche des beweglichen Stoßfängers (12) von der Arbeitsfläche (7) H2 ist,
die Höhe der oberen Fläche des Antikollisionselements (4) von der zu adsorbierenden Fläche (9) ist H3; und
die Höhe der unteren Oberfläche des Antikollisionselements (4) von der zu adsorbierenden Oberfläche (9) H4 ist,
wobei H2 ≤ H3 ≤ H1, oder H2 ≤ H4 ≤ H1.

13. Intelligente multimediale Reinigungseinheit nach Anspruch 1, wobei das Verbindungselement (3) ein Sicherheitsseil ist und die Sicherheitsschutzeinheit ferner ein mit dem Adsorptionselement (2) verbundenes Einziehelement (6) umfasst, wobei das Einziehelement (6) zum Einziehen des Sicherheitsseils verwendet wird.

14. Intelligente multimediale Reinigungseinheit nach Anspruch 3, bei der das Antikollisionselement (4) mit einer Ausweichrille (41) zum Ausweichen des Griffs (21) versehen ist.

15. Intelligente multimediale Reinigungseinheit nach Anspruch 1, wobei der selbstfahrende Oberflächenreinigungsroboter ein Glasreinigungsroboter oder ein Solarpanelreinigungsroboter ist.

16. Sicherheitsschutzeinheit, die an dem selbstfahrenden Oberflächenreinigungsroboter angeordnet ist, umfassend:
ein Adsorptionselement (2) zum Adsorbieren auf einer zu adsorbierenden Oberfläche (9), ist
**dadurch gekennzeichnet, dass** die äußere Endkante des Adsorptionselements (2) nach oben ragt, um den Griff (21) zu bilden, und der Griff (21) die äußere Endkante des Adsorptionselements (2) antreibt, um von der Adsorptionsoberfläche unter der Einwirkung der äußeren Kraft des Benutzers getrennt zu werden.

## Revendications

1. Un appareil de nettoyage intelligent multisupport, pour nettoyer une surface de travail (7),
comprenant un robot de nettoyage automoteur (1) et un appareil de protection de sécurité connecté au robot de nettoyage automoteur (1) par l'intermédiaire d'un élément de connexion (3), l'appareil de protection de sécurité comprenant un élément d'adsorption (2) destiné à adsorber sur une surface à adsorber (9), **caractérisé en ce qu'**une poignée (21) est formée le long d'un bord d'extrémité externe de l'élément d'adsorption (2), et la poignée (21) entraîne le bord d'extrémité externe de l'élément d'adsorption (2) à se séparer de la surface d'adsorption sous l'action d'une force externe d'un utilisateur.

2. L'appareil de nettoyage intelligent multisupport selon la revendication 1, dans lequel une partie médiane de la poignée (21) est dotée d'un trou traversant pour faciliter l'insertion du doigt d'un utilisateur.

3. L'appareil de nettoyage intelligent multisupport selon la revendication 1, dans lequel un élément anti-collision (4) est disposé sur l'élément d'adsorption (2), dans lequel l'élément anti-collision (4) ressort d'un bord d'extrémité externe de l'élément d'adsorption (2) de manière à empêcher un objet étranger de heurter l'élément d'adsorption (2).

4. L'appareil de nettoyage intelligent multisupport selon la revendication 3, dans lequel une section transversale de l'élément anti-collision (4) et une section transversale de l'élément d'adsorption (2) sont circulaires, et le diamètre de l'élément anti-collision (4) est plus grand que le diamètre de l'élément d'adsorption (2).

5. L'appareil de nettoyage intelligent multisupport selon la revendication 4, dans lequel l'élément anti-collision (4) et l'élément d'adsorption (2) sont disposés coaxialement.

6. L'appareil de nettoyage intelligent multisupport selon la revendication 3, comprenant en outre un montage de fixation (5) pour fixer l'élément anti-collision (4) de manière amovible sur l'élément d'adsorption (2).

7. L'appareil de nettoyage intelligent multisupport selon la revendication 6, dans lequel le montage de fixation (5) comprend une partie de serrage (51) disposée sur l'élément d'adsorption (2) et une partie de boucle (52) disposée sur l'élément anti-collision (4).

8. L'appareil de nettoyage intelligent multisupport selon la revendication 3, comprenant en outre un deuxième capteur (42) pour détecter une ampleur de la force de collision lorsque l'élément anti-collision (4) est soumis à une force de collision, et un module de contrôle connecté au deuxième capteur (42), dans lequel
le module de contrôle est configuré pour commander au robot de nettoyage de surface automoteur d'arrêter le fonctionnement, de tourner, ou de donner une alarme lorsque la force de collision détectée par le deuxième capteur (42) est supérieure à un seuil.

9. L'appareil de nettoyage intelligent multisupport selon la revendication 8, dans lequel il y a au moins deux deuxièmes capteurs (42), répartis de manière uniforme sur une surface d'appui de l'élément anti-collision (4).

10. L'appareil de nettoyage intelligent multisupport selon la revendication 3, dans lequel le robot de nettoyage de surface automoteur comprend un pare-chocs mobile (12) et un premier capteur connecté au pare-chocs mobile (12) pour générer un signal lorsque le pare-chocs mobile (12) s'enclenche.

11. L'appareil de nettoyage intelligent multisupport selon la revendication 10, dans lequel l'élément anti-collision (4) est situé à un emplacement où l'élément anti-collision (4) est libre de buter contre le pare-chocs mobile (12), pour permettre au pare-chocs mobile (12) de s'enclencher lorsque le robot de nettoyage de surface automoteur s'approche de l'élément d'adsorption (2).

12. L'appareil de nettoyage intelligent multisupport selon la revendication 11, dans lequel
la hauteur d'une surface supérieure du pare-chocs mobile (12) à partir de la surface de travail (7) est H1;
la hauteur d'une surface inférieure du pare-chocs mobile (12) à partir de la surface de travail (7) est H2 ;
la hauteur d'une surface supérieure de l'élément anti-collision (4) à partir de la surface à adsorber (9) est H3 ; et
la hauteur d'une surface inférieure de l'élément anti-collision (4) à partir de la surface à adsorber (9) est H4;
dans lequel H2 ≤ H3 ≤ H1, ou H2 ≤ H4 ≤ H1.

13. L'appareil de nettoyage intelligent multisupport selon la revendication 1, dans lequel l'élément de connexion (3) est un corde de sécurité, et l'appareil de protection de sécurité comprend en outre un élément rétractable (6) fixé avec l'élément d'adsorption (2), dans lequel l'élément rétractable (6) est utilisé pour rétracter la corde de sécurité.

14. L'appareil de nettoyage intelligent multisupport selon la revendication 3, dans lequel l'élément anti-collision (4) est pourvu d'une rainure élastique (41) pour céder la poignée (21).

15. L'appareil de nettoyage intelligent multisupport selon la revendication 1, dans lequel le robot de nettoyage de surface automoteur est un robot de nettoyage de vitres ou un robot de nettoyage de panneaux solaires.

16. Un appareil de protection de sécurité, appliqué à un robot de nettoyage de surface automoteur, comprenant :
un élément d'adsorption (2) destiné à adsorber sur une surface à adsorber (9), **caractérisé en ce qu'**un bord d'extrémité externe de l'élément d'adsorption (2) ressort vers le haut pour former une poignée (21), et la poignée (21) entraîne le bord d'extrémité externe de l'élément d'adsorption (2) à être séparé de la surface d'adsorption sous l'action d'une force externe d'un utilisateur.
